# EUROPÄISCHE PATENTSCHRIFT

(11) **EP 2 364 791 B1**
(45) Veröffentlichungstag und Bekanntmachung des Hinweises auf die Patenterteilung: **05.06.2013**
(21) Anmeldenummer: 11001561.7
(22) Anmeldetag: 25.02.2011
(51) Int. Cl.: B21D 39/04

(54) **Verfahren und Vorrichtung zum Verbinden eines Endabschnitts einer Leitung**
Method and device for connecting an end section of a pipe
Procédé et dispositif de liaison d'une section terminale d'une conduite

(30) Priorität: 12.03.2010 AT 4082010
(43) Veröffentlichungstag der Anmeldung: 14.09.2011
(73) Patentinhaber: Henn GmbH & Co.KG, 6850 Dornbirn (AT)
(72) Erfinder: Hartmann, Harald, 6850 Dornbirn (AT); Bachmann, Werner, 6971 Hard (AT)
(74) Vertreter: Burger, Hannes

(56) Entgegenhaltungen:
- DE-A1-102005 043 140
- US-A- 4 220 034

## Beschreibung

Die Erfindung bezieht sich auf ein Verfahren zum Verbinden eines Endabschnitts einer Leitung für flüssige oder gasförmige Medien mit einem Steckverbinder, wobei ein erster Wandabschnitt des Steckverbinders unter Verformung des zwischen dem ersten und einem zweiten Wandabschnitt des Steckverbinders liegenden Endabschnitts der Leitung mit einem Drückwerkzeug in Richtung zum zweiten Wandabschnitt verformt wird. Weiters bezieht sich die Erfindung auf eine Vorrichtung zum Verbinden eines Endabschnitts einer Leitung für flüssige oder gasförmige Medien mit einem Steckverbinder, der einen ersten Wandabschnitt und einen zweiten Wandabschnitt aufweist, zwischen denen der Endabschnitt der Leitung befestigbar ist, umfassend ein Drückwerkzeug zum Verformen des ersten Wandabschnitts in Richtung zum zweiten Wandabschnitt unter Verformung des zwischen dem ersten und dem zweiten Wandabschnitt liegenden Endabschnitts der Leitung.

Der Anschluss eines Endabschnitts einer medienführenden Leitung an einen Steckverbinder, der auch als Schlauchkupplung bezeichnet werden kann, wird häufig dadurch realisiert, dass der Endabschnitt der Leitung in einen Ringraum zwischen zwei hülsenförmigen Wandabschnitten des Steckverbinders eingeschoben wird, worauf der Endabschnitt der Leitung zwischen den beiden Wandabschnitten durch Eindrücken (Verpressen) zumindest eines der Wandabschnitte in Richtung zum anderen Wandabschnitt eingequetscht wird und hierbei verformt wird. Es ist hierbei eine Verformung des äußeren Wandabschnitts in Richtung zum inneren Wandabschnitt und/oder eine Verformung des inneren Wandabschnitts in Richtung zum äußeren Wandabschnitt bekannt, wobei die Verformung insbesondere in Form einer ringförmigen Verpressnut ausgebildet sein kann.

Bei solchen herkömmlichen Leitungsanschlüssen sind für den Eindrück- bzw. Verpressvorgang Wegregelungen, Kraftregelungen und Kombinationen von Kraft- und Wegregelungen bekannt. Bei der bekannten Wegregelung werden die Drückteile des Drückwerkzeuges zum Verformen des betreffenden Wandabschnitts um einen vorgegebenen konstanten Weg verfahren. Dieser fixe Weg wird in Abhängigkeit vom Steckverbinder und vom Leitungstyp eingestellt. Ein Nachteil der Wegregelung ist es, dass die Verformung des Wandabschnitts unabhängig von vorhandenen Toleranzen z.B. des Endabschnitts der Leitung durchgeführt wird und die Sicherheit der Verbindung zwischen der Leitung und dem Steckverbinder damit auf Grund vorhandener Toleranzen, insbesondere Toleranzen in der Wandstärke und dem Durchmesser des Endabschnitts der Leitung aber auch Toleranzen des Steckverbinders, beeinträchtigt sein.

Bekannt sind weiters Kraftregelungen für die ausgeübte Verformungskraft und kombinierte Kraft/Weg-Regelungen. Bei Regelungen, die (auch) die Verformungskraft als Regelgröße beinhalten, besteht das Problem der Komplexheit des Systems mit vielfältigen Einflussfaktoren. Neben der Härte des Materials der Leitung und der Härte des zu verformenden Materials des Steckverbinders, welche ebenfalls variieren kann, gehen auch die Tribologie zwischen dem Steckverbinder und dem Drückwerkzeug und zwischen dem Steckverbinder und der Leitung ein (insbesondere auf Grund der bei der Verformung der Leitung auftretenden Materialverdrängungen). Auch hängt beispielsweise die Härte des Leitungsmaterials von der Umgebungstemperatur ab. Auf Grund der vielfältigen Einflussfaktoren können auch bei solchen Kraft- oder Kraft/Weg-Regelungen die Ergebnisse deutlich variieren.

Eine Verpressung eines Steckverbinders mit einem Endabschnitt einer Leitung, bei welcher die Presskraft in Abhängigkeit vom Weg auf unterschiedliche Werte geregelt wird (=wegabhängige Kraftregelung), geht aus der DE 10 2005 043 140 A1 hervor. Der Endabschnitt der Leitung wird in eine Ringraum zwischen dem inneren hülsenförmigen ersten Wandabschnitt und dem äußeren hülsenförmigen zweiten Wandabschnitt eingesteckt, worauf mit einem Spreizwerkzeug der erste Wandabschnitt von innen her in Richtung zum äußeren Wandabschnitt gegen den im Ringraum zwischen den beiden Wandabschnitten eingesteckten Endabschnitt der Leitung eingedrückt wird, wobei eine ringförmig umlaufende Pressnut im ersten Wandabschnitt ausgebildet wird. Zur Kontrolle, ob der Endabschnitt der Leitung vollständig in den Ringraum eingeschoben ist, ist der äußere zweite Wandabschnitt mit Fensteröffnungen versehen.

Aufgabe der Erfindung ist es ein Verfahren bzw. eine Vorrichtung der eingangs genannten Art bereitzustellen, bei dem in einfacher Weise eine zuverlässige Verbindung des Steckverbinders mit dem Endabschnitt der Leitung, an der der Steckverbinder anzuschließen ist, ermöglicht wird. Erfindungsgemäß gelingt dies durch ein Verfahren mit den Merkmalen des Anspruchs 1 bzw. durch eine Vorrichtung mit den Merkmalen des Anspruchs 9.

Beim Verfahren bzw. bei der Vorrichtung gemäß der Erfindung wird mindestens eine Zuführeinrichtung eingesetzt, die einen inneren Kanal aufweist, durch den ein Fluid, vorzugsweise ein Gas, zuführbar ist. Die Zuführeinrichtung wird an den zweiten Wandabschnitt des Steckverbinders herangefahren und das durch den inneren Kanal zugeführte Fluid wird mindestens einer Fensteröffnung im zweiten Wandabschnitt zugeführt, die in einen Ringraum zwischen dem ersten Wandabschnitt und dem zweiten Wandabschnitt mündet. Beim Verformen des ersten Wandabschnitts mit dem Drückwerkzeug wird der Endabschnitt der Leitung im Bereich dieser mindestens einen Fensteröffnung an den zweiten Wandabschnitt angedrückt und dadurch ändert sich der Fluss des Fluids durch den inneren Kanal der Zuführeinrichtung bzw. der Druck des Fluids im inneren Kanal der Zuführeinrichtung. Das Verformen des ersten Wandabschnitts in Richtung zum zweiten Wandabschnitt wird in Abhängigkeit vom Fluss und/oder Druck des Fluids durchgeführt, zu welchem Zweck der Fluss und/oder Druck des Fluids erfasst wird. Hierdurch können Toleranzen beispielsweise der Wandstärke des Endabschnitts der Leitung ausgeglichen werden, wodurch die Zuverlässigkeit der Verbindung des Endabschnitts der Leitung mit dem Steckverbinder verbessert werden kann.

Die Verformung des ersten Wandabschnitts (das Verpressen des ersten Wandabschnitts) zum Verbinden mit dem Endabschnitt der Leitung kann vorteilhafterweise von innen nach außen durchgeführt werden. Der erste Wandabschnitt ist also der innere der beiden Wandabschnitte, wird also vom zweiten Wandabschnitt (und dem Endabschnitt der Leitung) umgeben und das Verformen des ersten Wandabschnitts wird mit einem Spreizwerkzeug durch Auseinanderspreizen von Spreizteilen (Spreizbacken) durchgeführt, die in den vom ersten Wandabschnitt umgebenen Raum eingeführt werden. Andererseits kann die Verformung des ersten Wandabschnitts auch von außen nach innen erfolgen, d.h. der erste Wandabschnitt ist also der äußere der beiden Wandabschnitte, umgibt also den zweiten Wandabschnitt (und den Endabschnitt der Leitung) und die an die äußere Oberfläche des ersten Wandabschnitts angesetzten Drückteile des Drückwerkzeugs wirken in Richtung zur zentralen Längsachse des Steckverbinders.

Die Verformung des ersten Wandabschnitts erfolgt in einem vorteilhaften Ausführungsbeispiel der Erfindung nur über einen Teil der axialen, d.h. in Richtung der zentralen Längachse des Steckverbinders gemessenen, Erstreckung des ersten Wandabschnitts, es wird in den ersten Wandabschnitt also eine Eindrückung (=Vertiefung bzw. Einbuchtung) eingebracht. Vorzugsweise ist diese Eindrückung um den Umfang des 1. Wandabschnitts umlaufend ausgebildet, also in Form einer ringförmigen Verpressnut. Der erste Wandabschnitt kann hierbei starr mit dem zweiten Wandabschnitt verbunden sein (durch eine einstückige Ausbildung oder durch eine starre Verbindung von zwei eigenen Teilen) oder von einem separaten Teil, das in Form einer Hülse oder eines Rings ausgebildet ist, gebildet werden.

In einem anderen möglichen Ausführungsbeispiel kann der erste Wandabschnitt, der in Form einer separaten Hülse bzw. eines separaten Rings ausgebildet ist, vom Drückwerkzeug über seine gesamte axiale Ausdehnung verformt werden, also in seinem Durchmesser insgesamt verkleinert (wenn der erste Wandabschnitt den zweiten Wandabschnitt umgibt) oder vergrößert (wenn der zweite Wandabschnitt den ersten Wandabschnitt umgibt) werden.

Durch die Verformung des ersten Wandabschnitts in Richtung zum zweiten Wandabschnitt wird auch der Endabschnitt der Leitung im Bereich der Verformung des ersten Wandabschnitts verformt, da der Abstand zwischen den beiden Wandabschnitten in diesem Bereich auf einen Wert verringert wird, der kleiner als die ursprüngliche Wandstärke des Endabschnitts der Leitung ist. Somit ragt der verformte erste Wandabschnitt (im Bereich seiner Eindrückung oder über seine gesamte axiale Länge) in eine Querschnittsverjüngung des Endabschnitts der Leitung und es wird eine (auch) formschlüssige Halterung des Endabschnitts der Leitung zwischen dem ersten und dem zweiten Wandabschnitt ausgebildet.

Vorteilhafterweise wird anhand des bei der Verformung des ersten Wandabschnitts überwachten Flusses und/oder Drucks des Fluids ein Referenzpunkt innerhalb eines Verformungsweges bestimmt, über den beim Verformen des ersten Wandabschnitts ein Drückteil bzw. ein jeweiliges Drückteil des Drückwerkzeugs verfahren wird. Dieser Referenzpunkt wird vorzugsweise dadurch bestimmt, dass der Punkt im Verformungsweg erfasst wird, an welchem bei der Verformung des ersten Wandabschnitts der Fluss des Fluids im inneren Kanal unter eine vorgegebene untere Schranke abfällt und/oder der Druck des Fluids im inneren Kanal über eine vorgegebene obere Schranke ansteigt. Dieser Abfall des Flusses bzw. Anstieg des Druckes rührt daher, dass das Material des Endabschnitts der Leitung im die (jeweilige) Fensteröffnung umgebenden Bereich an die zum ersten Wandabschnitt gerichtete Oberfläche des zweiten Wandabschnitts angedrückt wird, wodurch ein zunächst vorhandener Spalt zwischen dem Endabschnitt der Leitung und dem zweiten Wandabschnitt im Bereich um die Fensteröffnung abgedichtet wird. Der auf diese Weise bestimmte Referenzpunkt des Verformungsweges könnte auch als "Dichtpunkt" bezeichnet werden.

Zur Bestimmung des Referenzpunktes wird das freie Ende der Zuführeinrichtung, an dem der innere Kanal mündet, vorzugsweise zumindest im Wesentlichen abgedichtet in einem die Fensteröffnung ringförmig umgebenden Bereich an den zweiten Wandabschnitt angelegt.

Ein Referenzpunkt im Verformungsweg könnte beispielsweise auch aus der Größe der Änderung des Flusses und/oder Drucks des Fluids beim Verformen des ersten Wandabschnitts bestimmt werden.

Vorzugsweise wird, wenn beim Verformen des ersten Wandabschnitts der Referenzpunkt erreicht ist, ab diesem Referenzpunkt eine Wegsteuerung bzw. Wegregelung für das (jeweilige) Drückteil beim weiteren Verformen des ersten Wandabschnitts durchgeführt. Der erste Wandabschnitt kann hierbei beispielsweise nach Erreichen des Referenzpunktes noch um eine vorgegebene, d.h. vor der Verformung des ersten Wandabschnitts festgelegte, Wegstrecke des Verformungsweges verformt werden, indem das (jeweilige) Drückteil um diese vorgegebene Wegstrecke verfahren wird. Beispielsweise kann die vorgegebene Wegstrecke auf einen Wert gesetzt werden, der von der nominalen Wandstärke des Endabschnitts der Leitung abhängt und hierbei vorzugsweise mindestens 30% der nominalen Wandstärke des Endabschnitts der Leitung beträgt. So kann z.B. bei einer nominalen Wandstärke des Endabschnitts der Leitung von 2mm der Verformungsweg ab dem Referenzpunkt auf 1 mm festgesetzt werden, bei einer nominalen Wandstärke von 4mm auf 2mm. Auch eine Festsetzung auf einen anderen vorgegebenen Wert ist denkbar und möglich. So könnte beispielsweise der Verformungsweg ab dem Referenzpunkt auf einen Wert in Abhängigkeit vom radialen Abstand zwischen dem ersten und dem zweiten Wandabschnitt vor der Verformung des ersten Wandabschnitts gesetzt werden, vorzugsweise auf mindestens 20% des radialen Abstands zwischen dem ersten und zweiten Wandabschnitt vor der Verformung des ersten Wandabschnitts.

Andererseits könnte der Verformungsweg, um den das (jeweilige) Drückteil ab dem Referenzpunkt verfahren wird, auf einen während der Verformung des ersten Wandabschnitts bestimmten Wert gesetzt werden, insbesondere in Abhängigkeit von der Lage des bestimmten Referenzpunktes. So kann bei vorbekanntem radialen Abstand zwischen dem ersten und dem zweiten Wandabschnitt (vor der Verformung des ersten Wandabschnitts) aus der Lage des Referenzpunktes die Wandstärke des Endabschnitts der konkret eingesetzten Leitung (zumindest näherungsweise) ermittelt werden und der Verformungsweg ab dem Referenzpunkt auf einen vorgegebenen Prozentsatz der ermittelten Wandstärke gesetzt werden, vorzugsweise auf einen Prozentsatz von mindestens 30% der bestimmten Wandstärke des Endabschnitts der Leitung.

Wenn in dieser Schrift von "außen" und "innen" die Rede ist, so ist dies auf die Lage relativ zur zentralen Längsachse des Steckverbinders bezogen. Ein weiter außen liegendes Teil weist somit einen größeren Abstand von der zentralen Längsachse als ein weiter innen liegendes Teil auf.

Weitere Vorteile und Einzelheiten der Erfindung werden im Folgenden anhand der beiliegenden Zeichnung erläutert. In dieser zeigen:
Fig. 1 eine Schrägsicht eines Steckverbinders mit einem mit diesem zu verbindenden Endabschnitt einer Leitung, im getrennten Zustand;
Fig. 2 eine stirnseitige Ansicht des Steckverbinders von Fig. 1;
Fig. 3 einen Schnitt entlang der Linie AA von Fig. 2;
Fig. 4 einen mit dem in den Fig. 1-3 dargestellten Steckverbinder zusammensteckbaren Stutzen, in Schrägsicht;
Fig. 5 eine Ansicht von Drückteilen eines Drückwerkzeugs zum Verformen des ersten Wandabschnitts, Blickrichtung B in Fig. 6;
Fig. 6 einen Schnitt entlang der Linie CC von Fig. 5 zusammen mit einem auf die Drückteile aufgeschobenen Steckverbinder, einem in den Steckverbinder eingeschobenen Endabschnitt der Leitung und einem Teil der Zuführeinrichtung für das Fluid im vom Steckverbinder abgehobenen Zustand;
Fig. 7 eine Darstellung analog Fig. 6, wobei die Zuführeinrichtung an den Steckverbinder herangefahren ist und weitere Teile der Vorrichtung schematisch dargestellt sind;
Fig. 8 und 9 Darstellungen analog Fig. 5 und 6 nach dem Beginn des Verformens des ersten Wandabschnitts, der Referenzpunkt des Verformungsweges noch nicht erreicht;
Fig. 10 und 11 Darstellungen analog Fig. 5 und 6, der Referenzpunkt des Verformungsweges erreicht;
Fig. 12 ein vergrößertes Detail F von Fig. 11;
Fig. 13 und 14 Darstellungen analog Fig. 5 und 6, das Verformen des ersten Wandabschnitts abgeschlossen;
Fig. 15 ein vergrößertes Detail H von Fig. 14;
Fig. 16 eine stirnseitige Ansicht eines Steckverbinders im fertiggestellten Zustand der Verbindung mit dem Endabschnitt der Leitung;
Fig. 17 einen Schnitt entlang der Linie II von Fig. 16.

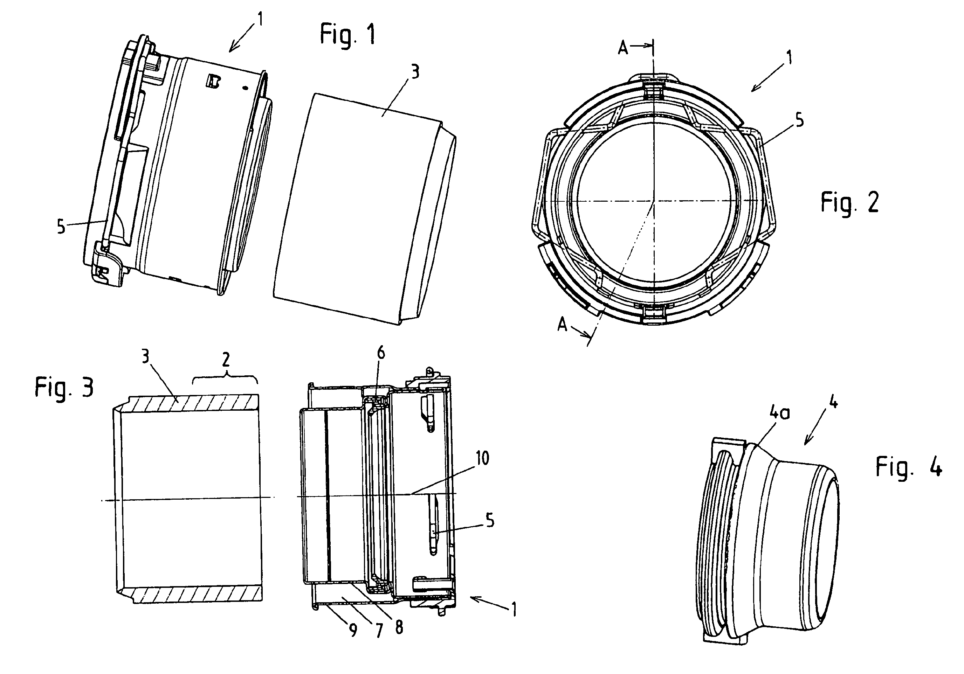

Ein Ausführungsbeispiel der Erfindung geht aus den Fig. 1 bis 17 hervor. Der Steckverbinder 1 ist an die Leitung 3 anzuschließen. Diese kann von einem mehr oder weniger flexiblen Schlauch oder einem im Wesentlichen starren Rohr gebildet werden und dient zur Führung von flüssigen oder gasförmigen Medien. In den Fig. 1-3 sind der Steckverbinder 1 und die Leitung 3 im getrennten Zustand dargestellt.

Der Steckverbinder 1 ist mit einem in Fig. 4 dargestellten Gegensteckverbinder zusammensteckbar. Der stutzenförmige, einen inneren Durchgangskanal aufweisende Gegensteckverbinder 4 wird hierzu von einer Einsteckseite her in die Einstecköffnung des Steckverbinders 1 eingesteckt. Im gezeigten Ausführungsbeispiel sind der Steckverbinder 1 und der Gegensteckverbinder 4 im zusammengesteckten Zustand durch eine Rastfeder 5 des Steckverbinders 1, die mit einer Rastschulter 4a des Gegensteckverbinders 4 zusammenwirkt, miteinander verrastet. Eine in einer Dichtungsnut des Steckverbinders 1 angeordnete Dichtung 6 dichtet den Steckverbinder 1 gegenüber dem Gegensteckverbinder 4 ab. Die Dichtung 6 könnte in einer anderen möglichen Ausführungsform auch am Gegensteckverbinder 4 gehalten sein.

Am von der Einsteckseite abgelegenen Ende weist der Steckverbinder 1 einen Ringraum 7 auf, der zwischen einem hülsenförmigen, im Querschnitt die zentrale Längsachse 10 des Steckverbinders 1 ringförmig umgebenden ersten Wandabschnitt 8 und einem hülsenförmigen, im Querschnitt die zentrale Längsachse 10 ringförmig umgebenden zweiten Wandabschnitt 9 des Steckverbinders 1 liegt. Der erste Wandabschnitt 8 wird im gezeigten Ausführungsbeispiel vom zweiten Wandabschnitt 9 umgeben, d.h. der erste Wandabschnitt 8 liegt innerhalb des zweiten Wandabschnitts 9, und die Wandabschnitte 8, 9 liegen koaxial zueinander.

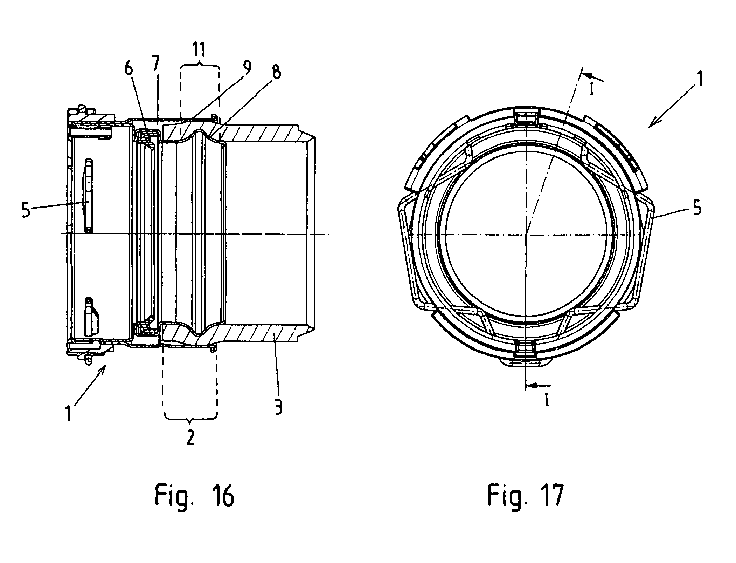

Zur Verbindung der Leitung 3 mit dem Steckverbinder 1 wird der Endabschnitt 2 der Leitung 3 von der der Einsteckseite des Steckverbinders 1 gegenüberliegenden Seite her in den Ringraum 7 eingeschoben und in der Folge wird der erste Wandabschnitt 8 in Richtung zum zweiten Wandabschnitt 9 verformt, indem in den ersten Wandabschnitt 8 eine Eindrückung 11 eingebracht wird. Dadurch wird der Endabschnitt 2 der Leitung 3 zwischen dem ersten und dem zweiten Wandabschnitt 8, 9 verquetscht (vgl. den fertiggestellten Zustand in den Fig. 16 und 17). Durch eine solche Verpressung des Steckverbinders 1 mit der Leitung 3 wird die Wandstärke des Endabschnitts 2 der Leitung 3 im Bereich der Eindrückung 11 verringert, insbesondere durch Fließen des Materials des Endabschnitts 2. Durch die im Endabschnitt 2 ausgebildete Vertiefung, in welche die Eindrückung 11 im ersten Wandabschnitt 8 ragt, wird eine formschlüssige Halterung der Leitung 3 im Steckverbinder 1 ausgebildet.

In dieser Weise mit einer Leitung 3 verbundene Steckverbinder 1 sind bekannt. Anstelle der nach außen gerichteten Verformung des innenliegenden Wandabschnitts 8 könnte auch der außenliegende Wandabschnitt 9 (der dann der "erste" Wandabschnitt wäre) nach innen verformt werden, wie dies ebenfalls bereits bekannt ist.

Vorzugsweise ist die Eindrückung 11 umlaufend, d.h. ringförmig ausgebildet. Auch mehrere Eindrückungen 11 an in Umfangsrichtung voneinander beabstandeten Stellen könnten vorgesehen sein.

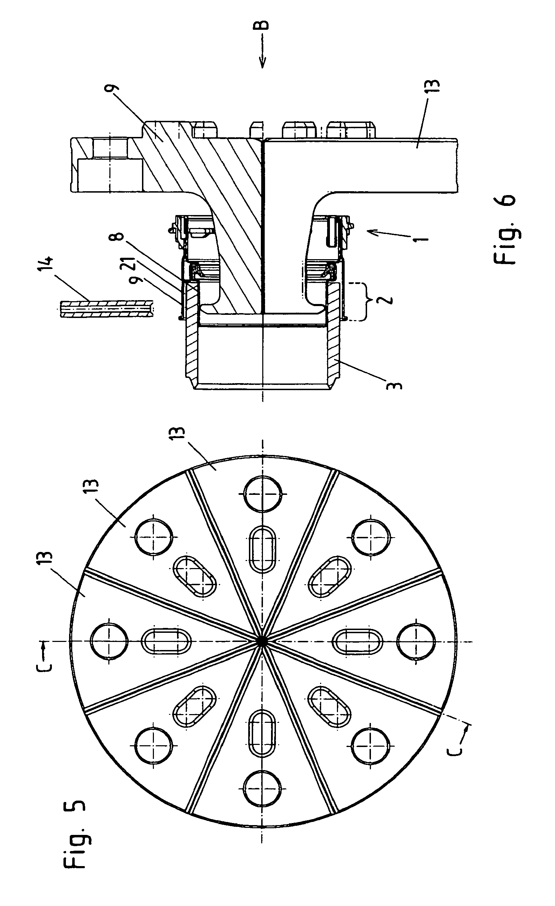

Die Ausbildung der Verbindung zwischen dem Steckverbinder 1 und der Leitung 3 wird im Folgenden anhand der Fig. 5-15 erläutert.

Die im gezeigten Ausführungsbeispiel in Form einer umlaufenden Eindrückung 11 ausgebildete Verformung des ersten Wandabschnitts 8 wird mit einem von einem Motor 25 angetriebenen Drückwerkzeug 12 durchgeführt, welches gegen den ersten Wandabschnitt 8, hier radial nach außen, verfahrbare und diesen verformende Drückteile 13 aufweist. Das Drückwerkzeug 12 ist im gezeigten Ausführungsbeispiel der Erfindung, bei dem die Verformung von innen nach außen erfolgt somit als Spreizwerkzeug ausgebildet. Solche Drückwerkzeuge sind bekannt, beispielsweise aus dem in der Beschreibungseinleitung genannten Stand der Technik, sodass eine genauere Erläuterung der Ausbildung des Drückwerkzeugs 12 an dieser Stelle unterbleiben kann. Ebenso sind von außen nach innen wirkende Drückwerkzeuge bekannt.

Nachdem der Endabschnitt 2 der Leitung 3 in den Ringraum 7 eingesteckt ist, wird der Steckverbinder 1 mit der eingesteckten Leitung 3 auf die Drückteile 13 des Drückwerkzeugs 12 aufgesteckt, vgl. Fig. 6.

Von einer Zuführeinrichtung 15 für ein Fluid ist in Fig. 6 lediglich ein einen inneren Kanal 20 aufweisender Finger 14 dargestellt, der im Zustand von Fig. 6 noch vom zweiten Wandabschnitt 9 beabstandet ist.

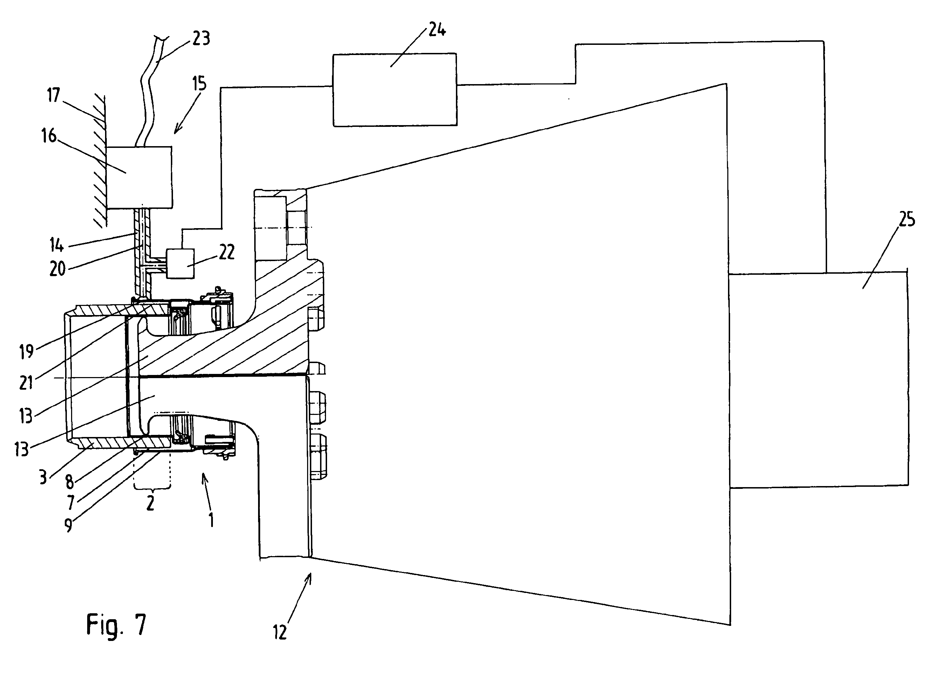

Als nächstes wird der Finger 14 an den zweiten Wandabschnitt 9 angestellt, vgl. Fig. 7. Der Finger 14 ist hierzu verschiebbar geführt und mittels eines in Fig. 7 nicht im Detail dargestellten Aktuators in radialer Richtung verstellbar. Zur verschiebbaren Führung des Fingers 14 ist in Fig. 7 schematisch ein Trägerteil 16 des Fingers 14 dargestellt, welches nach Art eines Schlittens vom Führungsteil 17 geführt ist.

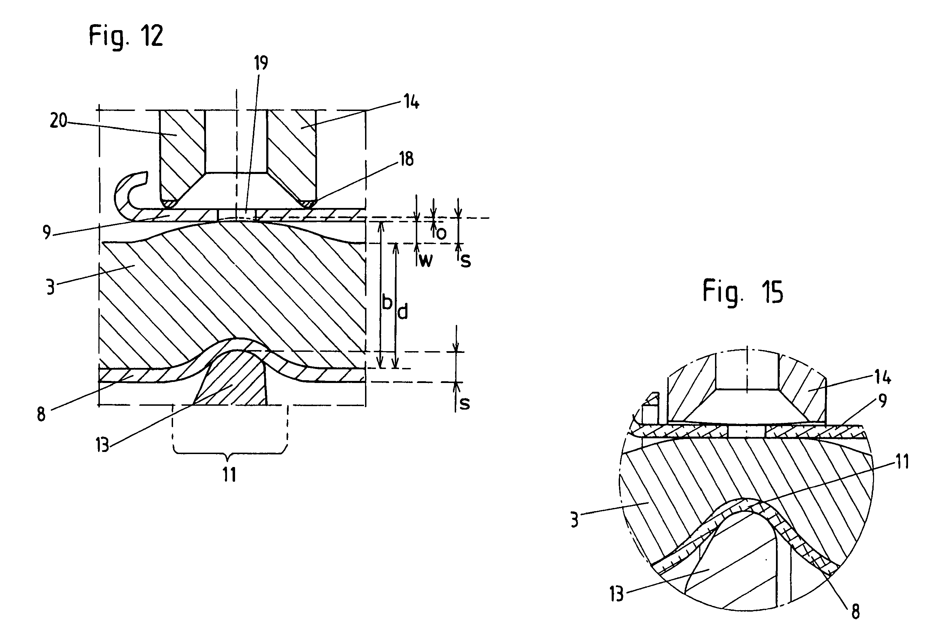

Im an den zweiten Wandabschnitt 9 angefahrenen Zustand des Fingers 14 liegt dieser stirnseitig mit einer (nur in Fig. 12 eingezeichneten) Dichtung 18 an der äußeren Oberfläche des zweiten Wandabschnitts 9 an, und zwar in einem eine Fensteröffnung 19, welche den zweiten Wandabschnitt 9 durchsetzt, ringförmig umgebenden Bereich. Es wird dadurch eine, zumindest weitgehende Abdichtung, zwischen dem Finger 14 und dem zweiten Wandabschnitt 9 ausgebildet, so dass ein Fluid, vorzugsweise Luft, welches durch den den Finger 14 axial durchsetzenden inneren Kanal 20 strömt, zur Fensteröffnung 19 geführt wird. In Fig. 7 ist eine Luftleitung 23 dargestellt, durch welche Pressluft der Zuführeinrichtung 15 zugeleitet wird.

Die Fensteröffnung 19 befindet sich in einem Bereich des zweiten Wandabschnitts 9, der dem Bereich des ersten Wandabschnitts 8, welcher vom Drückwerkzeug 12 verformt wird, gegenüberliegt (bezogen auf die Radialrichtung des Steckverbinders 1). In den Fig. ist nur eine einzelne Zuführeinrichtung 15 mit einem Finger 14 dargestellt. Vorzugsweise sind zwei oder mehr in Umfangsrichtung des Steckverbinders 1 beabstandet angeordnete Zuführeinrichtungen 15 vorhanden, deren Finger 14 im Bereich einer jeweiligen Fensteröffnung 19 zur Zufuhr von Fluid zur jeweiligen Fensteröffnung 19 an den zweiten Wandabschnitt 9 angestellt wird.

Anstelle eines Fingers 14 könnte die Zuführeinrichtung 15 auch ein anders geformtes einen inneren Kanal 20 aufweisendes Teil zur Anstellung an den zweiten Wandabschnitt 9 und Zufuhr von Fluid zur zugehörigen Fensteröffnung 19 aufweisen.

Nachdem der Endabschnitt 2 der Leitung 3 in den Ringraum 7 eingeschoben worden ist, liegt noch ein mehr oder weniger großer spaltförmiger Zwischenraum 21 zwischen dem zweiten Wandabschnitt 9 und dem Endabschnitt 2 der Leitung 3 vor. Ein durch den inneren Kanal 20 des Fingers 14 zugeführtes Fluid kann somit nach Durchtritt durch die Fensteröffnung 19 zwischen dem Endabschnitt 2 und dem zweiten Wandabschnitt 9 abströmen. Der Zwischenraum 21 kann in Abhängigkeit von den vorliegenden Toleranzen, beispielsweise der Wandstärke des Endabschnitts 2 der Leitung 3 oder des inneren Durchmessers des Endabschnitts der Leitung 3 variieren. Auch wenn dies in der beispielhaften Zeichnung nicht dargestellt ist, kann auch zwischen dem ersten Wandabschnitt 8 und dem Endabschnitt 2 der Leitung 3 ein mehr oder weniger großer spaltförmiger Zwischenraum vorliegen.

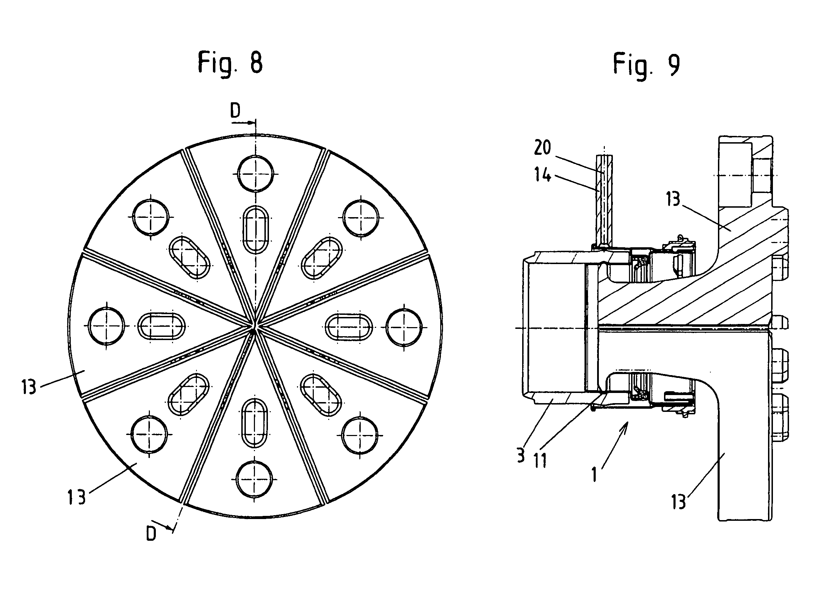

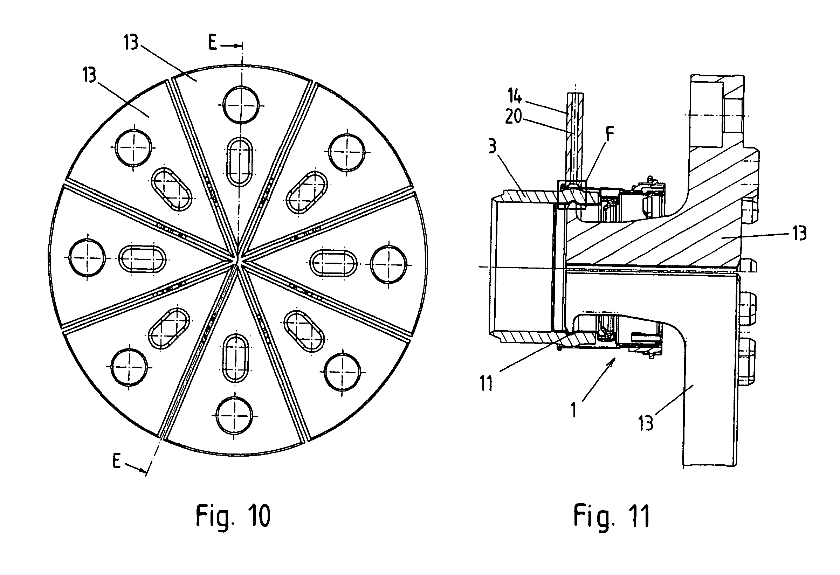

In der Folge werden die Drückteile 13 mehr und mehr radial nach außen gegen den ersten Wandabschnitt 8 verfahren, wobei sich nach und nach die hier ringförmige Eindrückung 11 ausbildet, vgl. Fig. 8-15. Im Zustand entsprechend den Fig. 8 und 9 ist der Zwischenraum 21 im Bereich um die Fensteröffnung 19 des zweiten Wandabschnitts 9 zwar verkleinert, aber noch vorhanden. Beim weiteren Eindrücken beginnt sich der Endabschnitt 2 im Bereich um die Fensteröffnung 19 an den zweiten Wandabschnitt 9 anzulegen. Im in den Fig. 10-12 dargestellten Zustand wird die Fensteröffnung 19 durch den Endabschnitt 2 verschlossen oder im Wesentlichen verschlossen, d.h. der Endabschnitt 2 liegt abgedichtet oder nahezu abgedichtet an der inneren Oberfläche des zweiten Wandabschnitts 9 im Bereich um die Fensteröffnung 19 an.

Beim Verformen des ersten Wandabschnitts 8 ausgehend vom in den Fig. 5 und 6 dargestellten Zustand, wird ein jeweiliges Drückteil 13 bis zur Fertigstellung der Eindrückung 11 über einen Verformungsweg verfahren.

Beim Eindrücken ausgehend vom in den Fig. 5 und 6 dargestellten Zustand wird der Fluss des durch den inneren Kanal 20 des Fingers 14 zugeführten Fluids von einer Messeinrichtung 22, die nur in Fig. 7 schematisch dargestellt ist, gemessen und von einer Steuereinrichtung 24 überwacht. Die Fluidquelle, von der aus das Fluid in den inneren Kanal 20 zugeführt wird, führt dieses mit einem maximalen Druck zu und wenn der in den Fig. 10-12 dargestellte Zustand erreicht ist, ist der von der Messeinrichtung 22 gemessene Fluss durch den inneren Kanal 20 auf einen Wert unterhalb einer unteren Schranke (d.h. unterhalb eines unteren Grenzwerts) abgesunken. Wenn von der Steuereinheit 24 festgestellt wird, dass der Fluss des Fluids beim Verformen des ersten Wandabschnitts 8 diese untere Schranke unterschreitet, wird die dann vorliegende Stellung der Drückteile als Referenzpunkt innerhalb des Verformungsweges festgelegt.

Ausgehend von diesem Referenzpunkt werden die Drückteile 13 von der Steuereinheit 24 noch einen definierten Weg radial nach außen verfahren, um die gewünschte Verquetschung des Endabschnitts 2 zwischen dem ersten und zweiten Wandabschnitt 8, 9 zu erreichen. Sobald der Referenzpunkt erreicht ist, wird somit für das weitere Verformen des ersten Wandabschnitts 8 durch die Drückteile 13 eine Wegsteuerung bzw. Wegregelung der Drückteile 13 durchgeführt.

Der nach Erreichen des Referenzpunktes noch zurückzulegende Verformungsweg kann beispielsweise ein vorgegebener Wert sein, der von der in die Steuereinheit 24 eingegebenen nominalen Wandstärke des Endabschnitts 2 der Leitung 3 abhängt. Beträgt beispielsweise der nominale Wert der Wandstärke (also ohne Berücksichtigung von Toleranzen) 4mm, so kann als Verformungsweg ab dem Referenzpunkt beispielsweise ein Wert von 2mm von der Steuereinheit 24 angesetzt werden.

Andererseits kann der ab dem Referenzpunkt noch zurückzulegende Verformungsweg auch von der Lage des Referenzpunktes im Verformungsweg abhängen. So ist es möglich, aus der Lage des Referenzpunktes die tatsächliche Wandstärke des Endabschnitts 2 der Leitung 3 zu bestimmen, dies mit relativ hoher Genauigkeit. Der Referenzpunkt des Verformungsweges, an welchem die Fensteröffnung 19 zumindest nahezu abgedichtet ist, wird erreicht, wenn die radiale Erstreckung der Verformung des ersten Wandabschnitts 8, im Ausführungsbeispiel ist dies die Tiefe der Eindrückung 11, der in radialer Richtung gemessenen Spaltbreite w zwischen dem Endabschnitt 2 und dem zweiten Wandabschnitt 9 plus einem die zumindest weitgehende Abdichtung bewirkenden Überlapp o entspricht, vgl. Fig. 12. Der notwendige Überlapp o zum Erreichen der gewünschten Abdichtung ist aber bekannt. Die Wandstärke d des Endabschnitts 2 ergibt sich somit aus dem radialen Abstand b zwischen dem ersten Wandabschnitt 8 und dem zweiten Wandabschnitt 9 abzüglich dem vom Drückteil 13 von der Anlage am ersten Wandabschnitt 8 bis zum Referenzpunkt gefahrenen Weg s zuzüglich dem notwendigen Überlapp o.

Zuvor wurde beschrieben, dass sich ein Spalt im Wesentlichen nur zwischen dem Endabschnitt 2 und dem zweiten Wandabschnitt 9 befindet, wie dies in der beispielhaften Zeichnung dargestellt ist. Es könnte sich aber auch ein Spalt zwischen dem Endabschnitt 2 und dem ersten Wandabschnitt 8 befinden oder der Spalt könnte sich im Wesentlichen nur zwischen dem Endabschnitt 2 und dem ersten Wandabschnitt 8 befinden. Die angesprochene Spaltbreite w ist die Summe der Spaltbreiten der vorhandenen Spalte.

Beispielsweise können die Drückteile 13 ab dem Referenzpunkt noch um einen Weg radial nach außen verfahren werden, der der Hälfte der so bestimmten Wandstärke des Endabschnitts 2 der Leitung 3 entspricht.

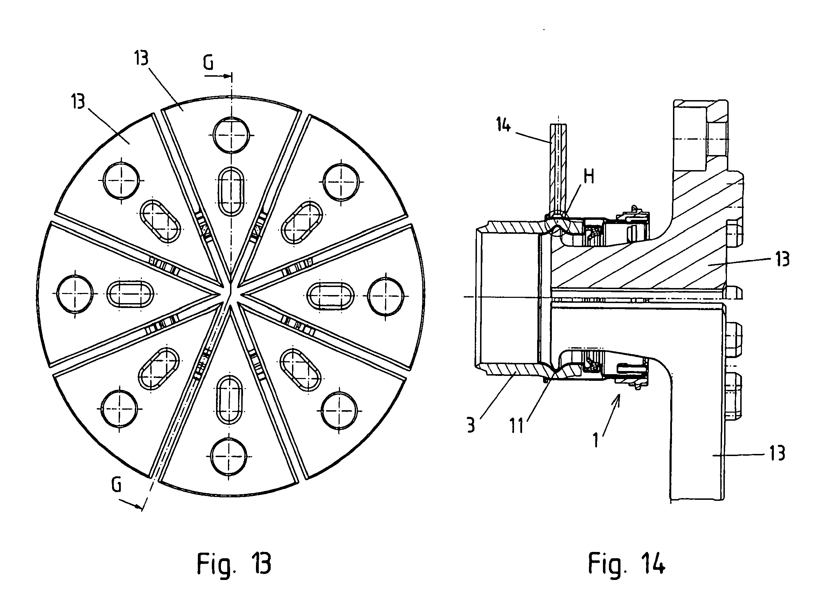

Der am Ende des Verformungsweges vorliegende Zustand ist in den Fig. 13-15 dargestellt. Die Fig. 16 und 17 zeigen den fertiggestellten Zustand des Steckverbinders 1. Falls, wie bevorzugt, mehrere in Umfangsrichtung voneinander beabstandete Finger 14 eingesetzt werden, welche jeweils mit einer separaten Fensteröffnung 19 im zweiten Wandabschnitt 9 zusammenwirken könnte der Referenzpunkt im Verformungsweg beispielsweise aus einer Mittelung der Messungen der einzelnen Finger 14 ermittelt werden. Es könnten auch mehrere in Umfangsrichtung beabstandete Fensteröffnungen 19 vorgesehen sein und die Zuführeinrichtung 15 könnte einen Backen aufweisen, von dem ein stirnseitiger Dichtabschnitt gegen den zweiten Wandabschnitt 9 angedrückt wird, wobei zwei oder mehr Fensteröffnungen 19 insgesamt ringförmig umgeben werden und der Backen gegenüber dem zweiten Wandabschnitt 9 abgedichtet ist. Die zwei oder mehr Fensteröffnungen würden dann gemeinsam mit dem inneren Kanal 20 der (jeweiligen) Zuführeinrichtung 15 kommunizieren.

Anstelle der Überwachung des Flusses durch den inneren Kanal 20 könnte während der Verformung des ersten Wandabschnitts 8 auch der Druck im inneren Kanal 20 erfasst werden oder eine Kombination einer Fluss- und einer Druckmessung könnte durchgeführt werden, um den Referenzpunkt zu ermitteln.

Die Fluss- und/oder Druckmessung kann kontinuierlich oder periodisch durchgeführt werden.

Anstelle des Vergleichs des Flusses und/oder Drucks mit einem absoluten Wert des Flusses und/oder Drucks, um den Referenzpunkt festzulegen, könnte hierzu auch die Änderung des Flusses und/oder Drucks herangezogen werden. Auch eine Kombination der Heranziehung des Absolutwertes und der Änderung ist denkbar und möglich.

Es könnten auch mehrere in axialer Richtung des Steckverbinders 1 voneinander beabstandete Eindrückungen 11 vorgesehen werden, von denen mindestens eine, vorzugsweise alle, in der beschriebenen Weise durch eine Wegsteuerung bzw. Wegregelung des Verformungsweges ab einem beim Eindrücken bestimmten Referenzpunkt ausgebildet werden.

Wie bereits erwähnt, könnte die mindestens eine Eindrückung 11 auch von außen nach innen eingebracht werden. Der die Eindrückung aufweisende erste Wandabschnitt wäre dann der äußere Wandabschnitt, der den inneren zweiten Wandabschnitt (und den Endabschnitt 2 der Leitung 3) umgibt. Der innere zweite Wandabschnitt würde dann die mindestens eine Fensteröffnung aufweisen, der das Fluid von der Zuführeinrichtung 15 zugeführt wird.

Zumindest der erste Wandabschnitt, der vom Drückwerkzeug 12 in Richtung zum zweiten Wandabschnitt verformt wird, besteht aus einem plastisch verformbaren Material, insbesondere Metall. Eine Ausbildung aus einem gebogenen Blech ist bevorzugt.

Der zweite Wandabschnitt kann ebenfalls aus Metall bestehen, beispielsweise kann der zweite Wandabschnitt (wie in den Fig. dargestellt) von einem gebogenen Blechteil gebildet werden, welches mit dem ersten Wandabschnitt einstückig ausgebildet ist oder starr mit diesem verbunden ist. Der zweite Wandabschnitt kann aber auch aus einem anderen Material als Metall bestehen und muss auch nicht plastisch verformbar sein.

Der erste Wandabschnitt, in dem die mindestens eine Eindrückung 11 ausgebildet wird (und der innerhalb oder außerhalb des zweiten Wandabschnitts liegen kann), kann auch von einem separaten Ring gebildet werden (dieser könnte auch als Hülse bezeichnet werden). Dieser kann im Vergleich zum Gehäuse des Steckverbinders 1, das dann den zweiten Wandabschnitt (nicht aber den ersten Wandabschnitt) umfasst, eine relativ kleine axiale Ausdehnung aufweisen. Falls der erste Wandabschnitt außen liegt (d.h. die Verformung wird von außen nach innen durchgeführt), würde die Leitung auf den zweiten Wandabschnitt aufgeschoben und darüber der separate Ring geschoben, der den ersten Wandabschnitt bildet. Dann würde der den ersten Wandabschnitt bildende Ring im Umfang mit Hilfe eines in Form eines Press- bzw. Reduzierwerkzeugs ausgebildeten Drückwerkzeugs im Durchmesser verkleinert (zusammengedrückt), wodurch die Leitung geklemmt wird. Die Leitung wird hierbei über die gesamte axiale Erstreckung des Rings verformt. Der Ring könnte auch über nur einen Teil seiner axialen Ausdehnung verformt werden, sodass eine Eindrückung im Ring ausgebildet wird. Analog könnte, wenn der Ring innen liegt (d.h. die Verformung von innen nach außen durchgeführt wird), die Leitung in den zweiten Wandabschnitt eingeschoben werden und in der Folge der den ersten Wandabschnitt bildende Ring in den Endabschnitt 2 der Leitung 3 eingeschoben werden, worauf der erste Wandabschnitt mit Hilfe eines Press- bzw. Spreizwerkzeuges im Durchmesser vergrößert und die Leitung geklemmt werden könnte. Der Ring könnte auch in diesem Fall nur über einen Teil seiner axialen Erstreckung verformt werden, sodass eine Eindrückung im Ring ausgebildet wird.

Alternativ könnte der zweite Wandabschnitt (der innerhalb oder außerhalb des ersten Wandabschnitts liegen kann) von einem separaten Ring gebildet werden. Dieser kann im Vergleich zum Gehäuse des Steckverbinders 1, das dann den ersten Wandabschnitt (aber nicht den zweiten Wandabschnitt) umfassen würde, eine relativ kleine axiale Ausdehnung aufweisen.

Wenn der erste und der zweite Wandabschnitt einstückig miteinander ausgebildet sind oder starr miteinander verbunden sind, so umfasst das Steckergehäuse sowohl den ersten Wandabschnitt als auch den zweiten Wandabschnitt.

Auch, insbesondere axial, voneinander beabstandete Eindrückungen, von denen mindestens eine von außen und von denen mindestens eine von innen eingebracht wird, sind denkbar und möglich.

Mittels eines erfindungsgemäßen Steckverbinders 1 können insbesondere Verbindungen von Abschnitten von Kühlwasserleitungen von Verbrennungsmotoren oder Ladeluftleitungen von Verbrennungsmotoren hergestellt werden. In solchen herrscht ein Druck von beispielsweise bis 6bar.

### Legende

### zu den Hinweisziffern:

| | |
|---|---|
| 1 | Steckverbinder |
| 2 | Endabschnitt |
| 3 | Leitung |
| 4 | Gegensteckverbinder |
| 4a | Rastschulter |
| 5 | Rastfeder |
| 6 | Dichtung |
| 7 | Ringraum |
| 8 | erster Wandabschnitt |
| 9 | zweiter Wandabschnitt |
| 10 | Längsachse |
| 11 | Eindrückung |
| 12 | Drückwerkzeug |
| 13 | Drückteil |
| 14 | Finger |
| 15 | Zuführeinrichtung |
| 16 | Trägerteil |
| 17 | Führungsteil |
| 18 | Dichtung |
| 19 | Fensteröffnung |
| 20 | innerer Kanal |
| 21 | Zwischenraum |
| 22 | Messeinrichtung |
| 23 | Luftleitung |
| 24 | Steuereinrichtung |
| 25 | Motor |

## Patentansprüche

1. Verfahren zum Verbinden eines Endabschnitts (2) einer Leitung (3) für flüssige oder gasförmige Medien mit einem Steckverbinder (1), wobei ein erster Wandabschnitt (8) des Steckverbinders (1) unter Verformung des zwischen dem ersten und einem zweiten Wandabschnitt (8, 9) des Steckverbinders (1) liegenden Endabschnitts (2) der Leitung (3) mit einem Drückwerkzeug (12) in Richtung zum zweiten Wandabschnitt (9) verformt wird, **dadurch gekennzeichnet, dass** mindestens eine einen inneren Kanal (20) aufweisende Zuführeinrichtung (15) an den zweiten Wandabschnitt (9) herangefahren wird und durch den inneren Kanal (20) ein Fluid mindestens einer Fensteröffnung (19) im zweiten Wandabschnitt (9), die in einen zwischen dem ersten und zweiten Wandabschnitt (8, 9) liegenden Ringraum (7) mündet, zugeführt wird und dass während des Verformens des ersten Wandabschnitts (8) der Fluss des Fluids durch den inneren Kanal (20) und/oder der Druck des Fluids im inneren Kanal (20) der Zuführeinrichtung (15) erfasst wird und das Verformen des ersten Wandabschnitts (8) in Abhängigkeit vom während des Verformen des ersten Wandabschnitts (8) erfassten Fluss und/oder Druck des Fluids durchgeführt wird.

2. Verfahren nach Anspruch 1, **dadurch gekennzeichnet, dass** die Zuführeinrichtung (15) in einem Bereich, der die Fensteröffnung (19) im zweiten Wandabschnitt (9) ringförmig umgibt, mit einem stirnseitigen Ende an den zweiten Wandabschnitt (9) angelegt wird.

3. Verfahren nach Anspruch 1 oder 2, **dadurch gekennzeichnet, dass** beim Verformen des ersten Wandabschnitts (8) mindestens ein Drückteil (13) des Drückwerkzeuges (12) über einen Verformungsweg verfahren wird und dass beim Verformen des ersten Wandabschnitts (8) anhand des Flusses und/oder Drucks des Fluids ein Referenzpunkt innerhalb des Verformungsweges bestimmt wird.

4. Verfahren nach Anspruch 3, **dadurch gekennzeichnet, dass** der Referenzpunkt durch einen Abfall des Flusses des Fluids durch den inneren Kanal (20) unter eine vorgegebene untere Schranke und/oder durch einen Anstieg des Drucks des Fluids im inneren Kanal (20) über eine vorgegebene obere Schranke bestimmt wird.

5. Verfahren nach Anspruch 3 oder 4, **dadurch gekennzeichnet, dass** das Drückteil (13) ab dem Referenzpunkt des Verformungsweges über eine vorgegebene oder über eine während des Verformens des ersten Wandabschnitts (8) bestimmte Wegstrecke des Verformungsweges verfahren wird.

6. Verfahren nach Anspruch 5, **dadurch gekennzeichnet, dass** die Wegstrecke, über die das mindestens eine Drückteil (13) ab dem Referenzpunkt verfahren wird, aus der Lage des Referenzpunktes im Verformungsweg abgeleitet wird.

7. Verfahren nach Anspruch 6, **dadurch gekennzeichnet, dass** die Wegstrecke, über die das Drückteil (13) ab dem Referenzpunkt verfahren wird, auf einen Wert von mindestens 30% der aus der Lage des Referenzpunktes innerhalb des Verformungsweges bestimmten Wandstärke des Endabschnitts (2) der Leitung (3) festgelegt wird.

8. Verfahren nach einem der Ansprüche 1 bis 7, **dadurch gekennzeichnet, dass** der erste Wandabschnitt (8) vom zweiten Wandabschnitt (9) umgeben wird und das Verformen des ersten Wandabschnitts (8) mit einem Spreizwerkzeug erfolgt.

9. Vorrichtung zum Verbinden eines Endabschnitts (2) einer Leitung (3) für flüssige oder gasförmige Medien mit einem Steckverbinder (1), der einen ersten Wandabschnitt (8) und einen zweiten Wandabschnitt (9) aufweist, zwischen denen der Endabschnitt (2) der Leitung (3) befestigbar ist, umfassend ein Drückwerkzeug (12) zum Verformen des ersten Wandabschnitts (8) in Richtung zum zweiten Wandabschnitt (9) unter Verformung des zwischen dem ersten und dem zweiten Wandabschnitt (8, 9) liegenden Endabschnitts (2) der Leitung (3), **dadurch gekennzeichnet, dass** die Vorrichtung weiters mindestens eine einen inneren Kanal (20) aufweisende Zuführeinrichtung (15), die an den zweiten Wandabschnitt (9) heranfahrbar ist und durch deren inneren Kanal (20) ein Fluid einer Fensteröffnung (19) im zweiten Wandabschnitt (9) zuführbar ist, die in einen zwischen dem ersten und dem zweiten Wandabschnitt (8, 9) liegenden Ringraum (7) mündet, und eine Messeinrichtung (22) zum Messen des Flusses und/oder Drucks des Fluids durch den bzw. im inneren Kanal (20) der Zuführeinrichtung (15) aufweist.

10. Vorrichtung nach Anspruch 9, **dadurch gekennzeichnet, dass** der innere Kanal (20) durch einen Finger (14) der Zuführeinrichtung (15) verläuft und am stirnseitigen Ende des Fingers (14), welches an den zweiten Wandabschnitt (9) andrückbar ist, mündet.

## Claims

1. Method of connecting an end section (2) of a pipe (3) for liquid or gaseous media to a plug connector (1), whereby a first wall portion (8) of the plug connector (1) is deformed by means of a forming tool (12) causing the end section (2) of the pipe (3) lying between the first and a second wall portion (8, 9) of the plug connector (1) to be deformed in the direction towards the second wall portion (9), **characterised in that** at least one feeding device (15) having an inner passage (20) is moved along the second wall portion (9) and a fluid is fed through the inner passage (20) from at least one window opening (19) in the second wall portion (9) which opens into an annular chamber (7) lying between the first and second wall portion (8, 9), and as the first wall portion (8) is being deformed, the flow of fluid through the inner passage (20) and/or the pressure of the fluid in the inner passage (20) of the feeding device (15) is detected and the first wall portion (8) is deformed as a function of the flow and/or pressure of the fluid detected whilst the first wall portion (8) is being deformed.

2. Method as claimed in claim 1, **characterised in that** the feeding device (15) is placed against the second wall portion (9) by means of a terminal end in a region which surrounds the window opening (19) in the second wall potion (9) in an annular arrangement.

3. Method as claimed in claim 1 or 2, **characterised in that** as the first wall portion (8) is deformed, at least one forming part (13) of the forming tool (12) is moved across a deformation path and a reference point within the deformation path is determined by means of the flow and/or pressure of the fluid as the first wall portion (8) is deformed.

4. Method as claimed in claim 3, **characterised in that** the reference point is determined by means of a drop in the flow of fluid through the inner passage (20) below a predefined bottom threshold and/or by a rise in the pressure of the fluid in the inner passage (20) above a predefined top threshold.

5. Method as claimed in claim 3 or 4, **characterised in that** the forming part (13) is moved from the reference point of the deformation path across a distance of the deformation path which is predefined or determined during deformation of the first wall portion (8).

6. Method as claimed in claim 5, **characterised in that** the distance across which the at least one forming part (13) is moved from the reference point is derived from the position of the reference point in the deformation path.

7. Method as claimed in claim 6, **characterised in that** the distance across which the forming part (13) is moved from the reference point is fixed at a value of at least 30% of the wall thickness of the end section (2) of the pipe (3) determined on the basis of the position of the reference point within the deformation path.

8. Method as claimed in one of claims 1 to 7, **characterised in that** the first wall portion (8) is surrounded by the second wall portion (9) and the first wall portion (8) is deformed by means of a prising tool.

9. Device for connecting an end section (2) of a pipe (3) for liquid or gaseous media to a plug connector (1) having a first wall portion (8) and a second wall portion (9) between which the end section (2) of the pipe (3) can be secured, comprising a forming tool (12) for deforming the first wall portion (8) in the direction towards the second wall portion (9) causing the end section (2) of the pipe (3) lying between the first and the second wall portion (8, 9) to be deformed, **characterised in that** the device further comprises at least one feeding device (15) having an inner passage (20) which can be moved along the second wall portion (9) and through the inner passage (20) of which a fluid can be fed from a window opening (19) in the second wall portion (9) which opens into an annular chamber (7) lying between the first and second wall portion (8, 9), and a measuring device (22) for measuring the flow and/or pressure of the fluid through or in the inner passage (20) of the feeding device (15).

10. Device as claimed in claim 9, **characterised in that** the inner passage (20) extends through a finger (14) of the feeding device (15) and opens at the terminal end of the finger (14) which can be pressed against the second wall portion (9).

## Revendications

1. Procédé de liaison d'une section d'extrémité (2) d'une conduite (3) pour des milieux liquides ou gazeux avec un connecteur à fiche (1), une première section de paroi (8) du connecteur à fiche (1) étant déformée par la déformation de la section d'extrémité (2) de la conduite (3) se trouvant entre la première et la deuxième section de paroi (8, 9) du connecteur à fiche (1) avec un outil de pression (12) en direction de la deuxième section de paroi (9), **caractérisé en ce qu'**au moins un dispositif d'alimentation (15) comprenant un canal interne (20) est disposé sur la deuxième section de paroi (9) et, à travers le canal interne (20), un fluide est introduit dans au moins une ouverture de fenêtre (19) dans la deuxième section de paroi (9), qui débouche dans une chambre annulaire (7) située entre la première et la deuxième section de paroi (8, 9) et **en ce que**, pendant la déformation de la première section de paroi (8), le débit du fluide à travers le canal interne (20) et/ou la pression du fluide dans le canal interne (20) du dispositif d'alimentation (15) est mesuré(e) et la déformation de la première section de paroi (8) est effectuée en fonction du débit et/ou de la pression du fluide mesuré(e) pendant la déformation de la première section de paroi (8).

2. Procédé selon la revendication 1, **caractérisé en ce que** le dispositif d'alimentation (15) est disposé dans une partie qui entoure l'ouverture de fenêtre (19) dans la deuxième section de paroi (9) de manière annulaire, avec son extrémité frontale sur la deuxième section de paroi (9).

3. Procédé selon la revendication 1 ou 2, **caractérisé en ce que**, lors de la déformation de la première section de paroi (8), au moins une partie de pression (13) de l'outil de pression (12) est déplacé sur une course de déformation et **en ce que**, lors de la déformation de la première section de paroi (8) à l'aide du débit et/ou de la pression du fluide, un point de référence est déterminé à l'intérieur de la course de déformation.

4. Procédé selon la revendication 3, **caractérisé en ce que** le point de référence est déterminé par une diminution du débit du fluide à travers le canal interne (20) sous un seuil inférieur prédéterminé et/ou par une augmentation de la pression du fluide dans le canal interne (20) au-delà d'un seuil supérieur prédéterminé.

5. Procédé selon la revendication 3 ou 4, **caractérisé en ce que** la partie de pression (13) est déplacée à partir du point de référence de la course de déformation sur une portion de la course de déformation prédéterminée ou déterminée pendant la déformation de la première section de paroi (8).

6. Procédé selon la revendication 5, **caractérisé en ce que** la portion de trajet sur laquelle l'au moins une partie de pression (13) est déplacée à partir du point de référence est déterminée à partir de la position du point de référence dans la course de déformation.

7. Procédé selon la revendication 6, **caractérisé en ce que** la portion de trajet sur laquelle la partie de pression (13) est déplacée à partir du point de référence est déterminée à une valeur d'au moins 30% de l'épaisseur de paroi de la section d'extrémité (2) de la conduite (3) déterminée à partir de la position du point de référence dans la course de déformation.

8. Procédé selon l'une des revendications 1 à 7, **caractérisé en ce que** la première section de paroi (8) est entourée par la deuxième section de paroi (9) et la déformation de la première section de paroi (8) a lieu à l'aide d'un outil d'écartement.

9. Dispositif permettant de relier une section d'extrémité (2) d'une conduite (3) pour des milieux liquides ou gazeux avec un connecteur à fiche (1), qui comprend une première section de paroi (8) et une deuxième section de paroi (9), entre lesquelles la section d'extrémité (2) de la conduite (3) peut être fixée, comprenant un outil de pression (12) permettant de déformer la première section de paroi (8) dans la direction de la deuxième section de paroi (9) en déformant la section d'extrémité (2) de la conduite (3) située entre la première et la deuxième section de paroi (8, 9), **caractérisé en ce que** le dispositif comprend en outre au moins un dispositif d'alimentation (15) comprenant un canal interne (20), qui peut passer par la deuxième section de paroi (9) et à travers le canal interne (20) duquel un fluide peut être introduit dans une ouverture de fenêtre (19) de la deuxième section de paroi (9), qui débouche dans une chambre annulaire (7) se trouvant entre la première et la deuxième section de paroi (8, 9), et un dispositif de mesure (22) pour la mesure du débit et/ou de la pression du fluide à travers ou dans le canal interne (20) du dispositif d'alimentation (15).

10. Dispositif selon la revendication 9, **caractérisé en ce que** le canal interne (20) traverse un doigt (14) du dispositif d'alimentation (15) et débouche à l'extrémité frontale du doigt (14) qui peut être comprimé contre la deuxième section de paroi (9).
